# EUROPEAN PATENT APPLICATION

(11) **EP 2 362 676 A1**
(43) Date of publication of application: **31.08.2011**
(21) Application number: 10153934.4
(22) Date of filing: 18.02.2010
(51) Int. Cl.: H04Q 11/00

(54) **Methods and devices for reducing the electric power consumption of an optical network unit**

(71) Applicant: Mitsubishi Electric R&D Centre Europe B.V., 1119 NS Schiphol Rijk (NL); Mitsubishi Electric Corporation, Chiyoda-ku Tokyo 100-8310 (JP)
(72) Inventor: Mangin, Christophe, 35708 Rennes Cedex 7 (FR); Lavillonniere, Eric, 35708 Rennes Cedex 7 (FR); Weppe, Olivier, 35708 Rennes Cedex 7 (FR)
(74) Representative: Maillet, Alain

(57) **Abstract**

The present invention concerns a method for reducing the electric power consumption of an optical network unit of a passive optical network, the passive optical network comprising an optical line terminal connected to a telecommunication network, a splitter and plural optical network units.The optical line terminal:
- receives data from the telecommunication network,
- identifies the optical network unit to which data are intended,
- memorizes the data,
- transfers information enabling the determination, by the identified optical network unit, of a first time period in which the identified optical network unit receives data,
- transfers data according to the first time period.

## Description

The present invention relates generally to methods and devices for reducing the electric power consumption of an optical network unit of a passive optical network.

A passive optical network comprises an optical line terminal connected to a telecommunication network, a splitter and plural optical network units. The optical line terminal is linked to the splitter through an optical fibre and the splitter is linked to the plural optical network units through respective optical fibres.

In classical passive optical networks, the optical networks units are fully operational even if they have no data to transmit or receive.

Electric power management is then not efficient in classical passive optical networks. That situation is not ecological.

The present invention aims at providing a solution which enables to improve the electric power management in passive optical networks.

To that end, the present invention concerns a method for reducing the electric power consumption of an optical network unit of a passive optical network, the passive optical network comprising an optical line terminal connected to a telecommunication network, a splitter and plural optical network units, the optical line terminal being linked to the splitter through an optical fibre, the splitter being linked to the plural optical network units through respective optical fibres, characterised in that the method comprises the steps, executed by the optical line terminal, of:
- receiving data from the telecommunication network,
- identifying the optical network unit to which data are intended,
- memorizing the data,
- transferring information enabling the determination, by the identified optical network unit, of a time period in which the identified optical network unit receives data,
- transferring data according to the time period.

The present invention concerns also a device for reducing the electric power consumption of an optical network unit of a passive optical network, the passive optical network comprising an optical line terminal connected to a telecommunication network, a splitter and plural optical network units, the optical line terminal being linked to the splitter through an optical fibre, the splitter being linked to the plural optical network units through respective optical fibres, characterised in that the device for limiting the electric power consumption is included in the optical line terminal and comprises :
- means for receiving data from the telecommunication network,
- means for identifying the optical network unit to which data are intended,
- means for memorizing data,
- means for transferring information enabling the determination by the identified optical network unit of a first time period in which the identified optical network unit receives data,
- means for transferring data according to the first time period.

Thus, as the optical network unit is able to determine when it will receive data from the optical line terminal, the optical network unit can enter a downlink idle state wherein at least one component used for receiving signals from the optical fibre linking the optical network unit to the splitter is set in a state wherein the electric power consumption of the optical network unit is reduced when it does not receive data. The electric power consumption of the optical network unit is then reduced.

Furthermore, by memorizing data, the optical line terminal can group data to transfer to one optical network unit into one period of time reducing then the number of switching between normal electric power consumption state and idle state. The electric power consumption of the optical network unit is also decreased.

According to a particular feature, information are transferred in a first message which further comprises information enabling the determination, by at least the identified optical network unit, of the next first message reception time.

Thus, the present invention is applicable to passive optical networks having variable information transmission cycles.

Furthermore, as the optical network unit is able to determine when it will receive information from the optical line terminal, the optical network unit can enter in a downlink idle state when it does not receive data or information. The electric power consumption of the optical network unit is then reduced.

According to a particular feature, the optical line terminal:
- receives, in a second time period, at least one second message which is representative of a request, by at least one optical network unit, to transfer data,
- identifies at least one optical network unit which is susceptible to transfer one second message,
- allocates resources of the passive optical network to the at least one identified optical network unit which is susceptible to transfer one second message.

Thus, it is not necessary to poll optical network units in order to know if they request or not resources of the passive optical network.

According to a particular feature, the at least one optical network unit which is susceptible to transfer one second message is identified by identifying in which timeslot among timeslots of the second time period the at least one second message which is representative of a request to transfer data by the at least one optical network unit is transferred.

Thus, the identification of the at least one optical network unit is simple. If a given timeslot is used by plural predetermined optical network units to transfer a second message, the total duration of the timeslots is reduced in comparison with a case wherein one respective timeslot is allocated to each optical network unit.

Furthermore, as not all the optical network units may transfer a second message within the same timeslot, only a limited number of optical network units is identified as requesting resources, then resources are allocated to that limited number of optical network units.

According to a particular feature, the optical line terminal:
- determines at least one optical network unit that has no data to transfer,
- inserts, within a time cycle, the second time period in which the at least one optical network unit which has no data to transfer may transfer at least one second message which is representative of a request, by the at least one optical network unit, to transfer data.

Thus, the overall resources of the passive optical network are used efficiently.

According to a particular feature, the optical line terminal transfers information enabling the determination, within the time cycle, of the second time period in which the at least one optical network unit which has no data to transfer may transfer at least one second message.

Thus, it is possible to modify the location of the second time period within the time cycle.

According to a particular feature, the optical line terminal:
- determines that each optical network unit has data to transfer,
- suppresses within the time cycle, the second time period in which at least one optical network unit which has no data to transfer may transfer at least one second message which is representative of a request, by the at least one optical network unit, to transfer data.

Thus, the overall resources of the passive optical network are used efficiently.

According to still another aspect, the present invention concerns a method for reducing the electric power consumption of an optical network unit of a passive optical network, the passive optical network comprising an optical line terminal connected to a telecommunication network, a splitter and plural optical network units, the optical line terminal being linked to the splitter through an optical fibre, the splitter being linked to the plural optical network units through respective optical fibres, characterised in that the method comprises the steps, executed by at least one optical network unit, of:
- receiving information enabling the determination of a first time period in which the optical network unit receives data,
- setting at least one component used for receiving signals from the optical fibre linking the optical network unit to the splitter in a state wherein the electric power consumption of the optical network unit is reduced according to the determined first time period.

The present invention concerns also a device for reducing the electric power consumption of an optical network unit of a passive optical network, the passive optical network comprising an optical line terminal connected to a telecommunication network, a splitter and plural optical network units, the optical line terminal being linked to the splitter through an optical fibre, the splitter being linked to the plural optical network units through respective optical fibres, characterised in that the device for limiting the electric power consumption is included in one optical network unit and comprises:
- means for receiving information enabling the determination of a first time period in which the optical network unit receives data,
- means for setting at least one component used for receiving signals from the optical fibre linking the optical network unit to the splitter in a state wherein the electric power consumption of the optical network unit is reduced according to the determined first time period.

Thus, as the optical network unit is able to determine when it will receive data from the optical line terminal, the optical network unit can enter in a downlink idle state when it does not receive data. The electric power consumption of the optical network unit is reduced.

According to a particular feature, information are received in a first message which further comprises information enabling the determination of the next first message reception time and the at least one component used for receiving signals from the optical fibre linking the optical network unit to the splitter in the state wherein the electric power consumption of the optical network unit is reduced according to information enabling the determination of the next first message reception time.

Thus, the present invention is applicable to passive optical networks having variable information transmission cycles.

According to a particular feature, the optical network unit :
- determines that no data have to be transferred through the optical fibre linking the optical network unit to the splitter,
- sets at least one component used for transferring signals through the optical fibre linking the optical network unit to the splitter in a state wherein the electric power consumption of the optical network unit is reduced.

Thus, the electric power consumption of the optical network unit is reduced. According to a particular feature, the optical network unit :
- identifies a request to transfer data through the optical fibre linking the optical network unit to the splitter,
- sets at least one component used for transferring signals through the optical fibre linking the optical network unit to the splitter in a state wherein the electric power consumption of the optical network unit is not reduced,
- transfers in a second time period a second message which is representative of a request, by the optical network unit, to transfer data.

Thus, it is not necessary for the optical line terminal to poll optical network units in order to know if they request or not resources of the passive optical network. The optical network unit can stay in an uplink idle state when it has no data to transfer.

According to still another aspect, the present invention concerns computer programs which can be directly loadable into a programmable device, comprising instructions or portions of code for implementing the steps of the methods according to the invention, when said computer programs are executed on a programmable device.

Since the features and advantages relating to the computer programs are the same as those set out above related to the method and apparatus according to the invention, they will not be repeated here.

The characteristics of the invention will emerge more clearly from a reading of the following description of an example of embodiment, the said description being produced with reference to the accompanying drawings, among which :
Fig. 1 represents a passive optical network in which the present invention is implemented;
Fig. 2 is a diagram representing the architecture of an optical line terminal in which the present invention is implemented ;
Fig. 3 is a diagram representing the architecture of an optical network unit in which the present invention is implemented ;
Fig. 4 discloses an example of an algorithm executed by an optical line terminal for uplink idle state management according to the present invention ;
Fig. 5 discloses an example of an algorithm executed by an optical network unit for uplink idle state management according to the present invention ;
Fig. 6 represents an example of a chronogram of uplink idle state management according to the present invention;
Fig. 7 discloses an example of an algorithm executed by an optical line terminal for downlink idle state management according to the present invention ;
Fig. 8 discloses an example of an algorithm executed by an optical network unit for downlink idle state management according to the present invention ;
Fig. 9 represents an example of a chronogram of downlink idle state management according to the present invention.

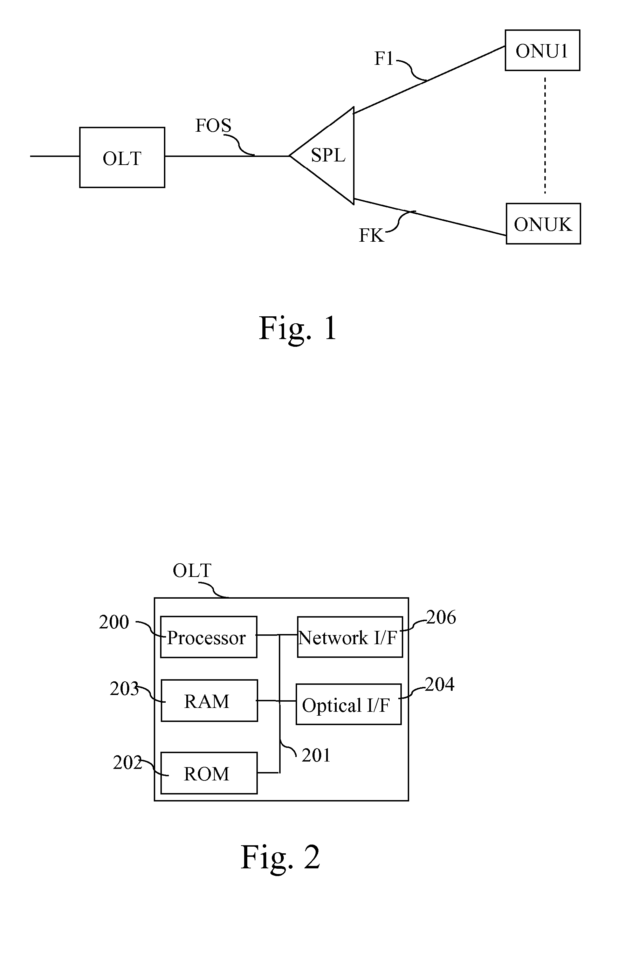

**Fig. 1** represents a passive optical network in which the present invention is implemented.

A passive optical network (PON) is a point to multipoint fibre to the premises network architecture in which unpowered optical splitters SPL are used to enable a single optical fibre FOS to serve from 1 to K premises through optical fibres F1 to FK.

A PON consists of an optical line terminal OLT at the service provider's central office, an optical splitter SPL and a number of optical network units ONU1 to ONUK near end users.

In a PON, downlink signals are broadcasted by the optical line terminal OLT to each premise ONU1 to ONUK sharing a single fibre between the optical line terminal OLT and the splitter SPL. Encryption is used to prevent eavesdropping.

Uplink signals transferred by the optical network units ONU1 to ONUK are transferred to the optical line terminal OLT using a multiple access protocol, usually time division multiple access (TDMA) which is controlled by the optical line terminal OLT.

**Fig. 2** is a diagram representing the architecture of an optical line terminal in which the present invention is implemented.

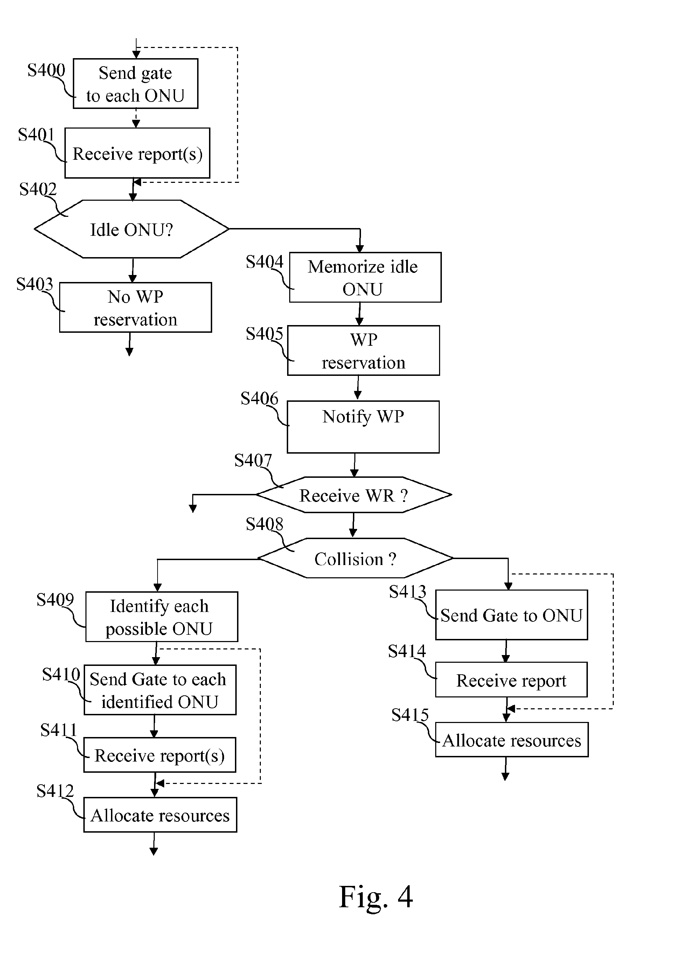

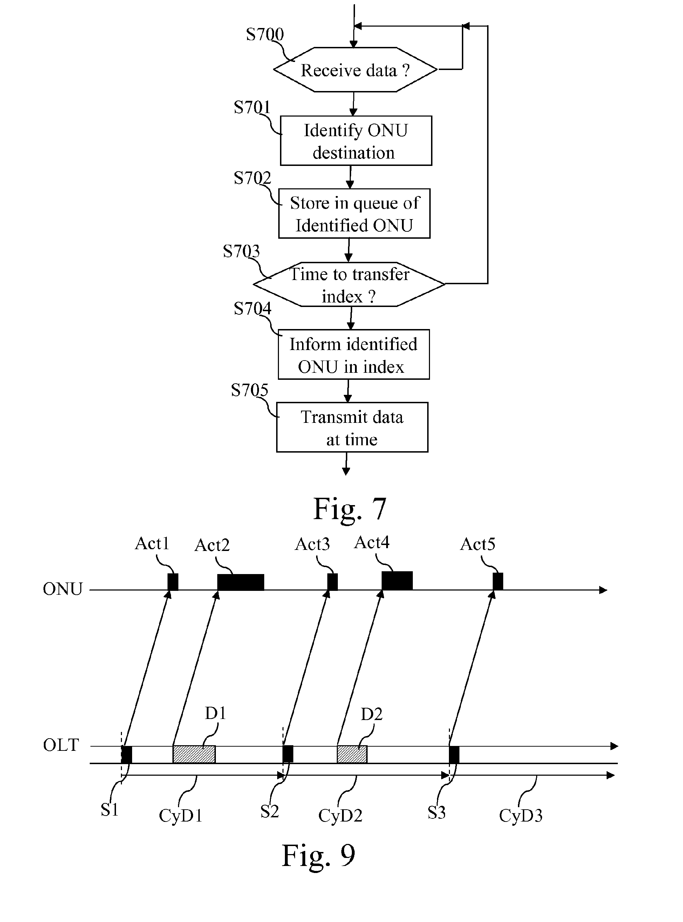

The optical line terminal OLT has, for example, an architecture based on components connected together by a bus 201 and a processor 200 controlled by the programs as disclosed in Figs. 4 and/or 7.

It has to be noted here that, instead of being based on a processor, the architecture of the optical line terminal OLT may be based on dedicated integrated circuits.

The bus 201 links the processor 200 to a read only memory ROM 202, a random access memory RAM 203, an optical interface I/F 204 and a network interface I/F 206.

The memory 203 contains registers intended to receive variables and the instructions of the programs related to the algorithm as disclosed in Figs. 4 and/or 7.

The processor 200 controls the operation of the optical interface I/F 204 and the network interface I/F 206.

The read only memory 202 contains instructions of the programs related to the algorithms as disclosed in Figs. 4 and/or 7, which are transferred, when the optical line terminal OLT is powered on, to the random access memory RAM 203.

The optical line terminal OLT is connected to a telecommunication network not shown in Fig. 1 through the network interface 206. For example, the network interface 206 is an optical interface or an interface for classical copper based network.

The optical line terminal OLT is connected to the optical network units ONU1 to ONUK through the optical interface I/F 204.

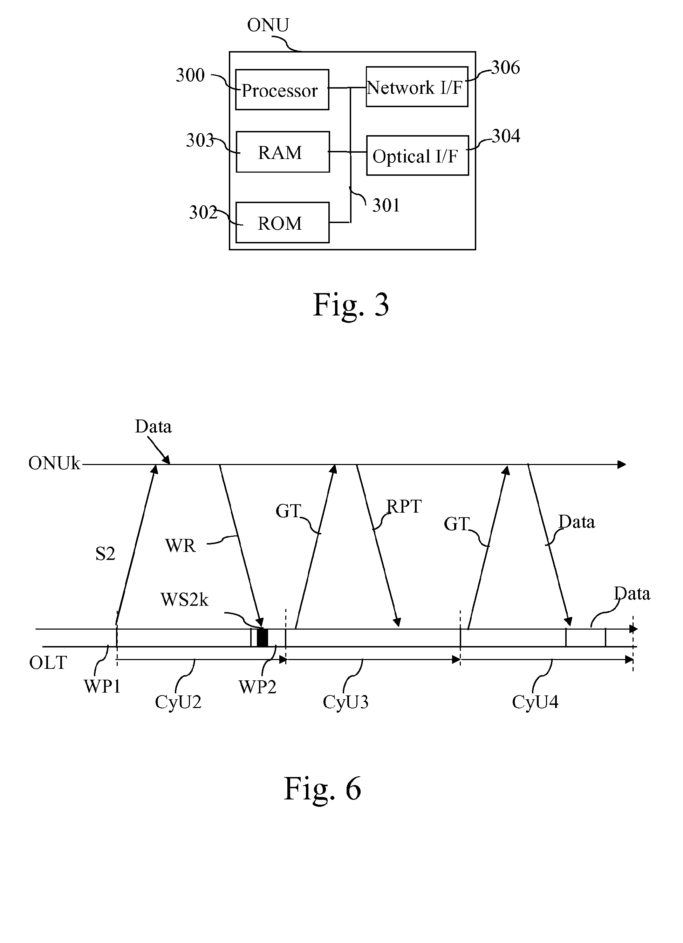

**Fig. 3** is a diagram representing the architecture of an optical network unit in which the present invention is implemented.

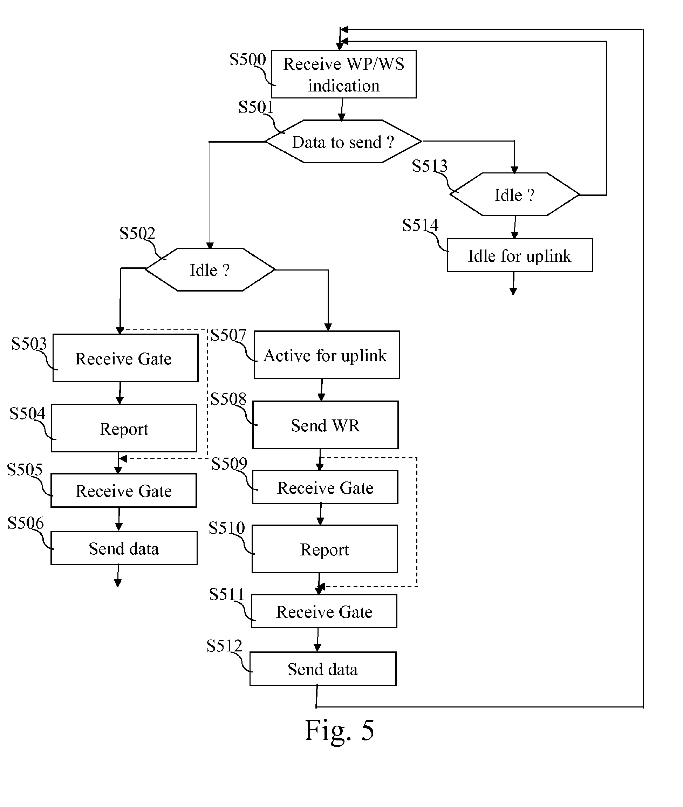

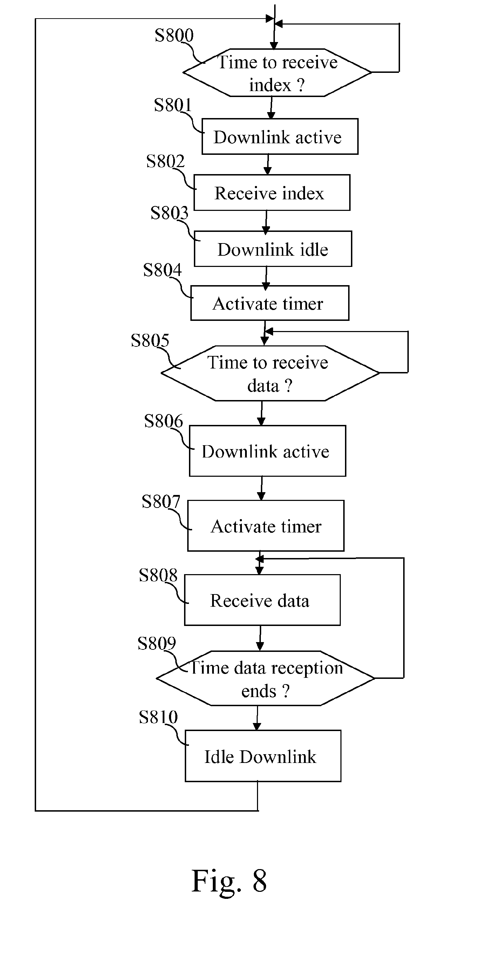

The optical network unit ONU has, for example, an architecture based on components connected together by a bus 301 and a processor 300 controlled by the program as disclosed in Figs. 5 and/or 8.

It has to be noted here that, instead of being based on a processor, the architecture of the optical network unit ONU may be based on dedicated integrated circuits.

The bus 301 links the processor 300 to a read only memory ROM 302, a random access memory RAM 303 and an optical interface I/F 304.

The memory 303 contains registers intended to receive variables and the instructions of the programs related to the algorithms as disclosed in Figs. 5 and/or 8.

The processor 300 controls the operation of the optical interface I/F 304.

The read only memory 302 contains instructions of the program related to the algorithms as disclosed in Figs. 5 and/or 8, which are transferred, when the optical network unit ONU is powered on, to the random access memory RAM 303.

The optical network unit ONU is connected to a telecommunication network or a device like a personal computer not shown in Fig. 1 through the network interface 306. For example, the network interface 306 is an interface for classical copper based network or a wireless interface.

**Fig. 4** discloses an example of an algorithm executed by an optical line terminal for uplink idle state management according to the present invention.

More precisely, the present algorithm is executed by the processor 200 of the optical line terminal OLT.

At step S400, the processor 200 commands the transfer of a message to each optical network unit ONU in order to poll the optical network units ONU1 to ONUK for their queue status. For example, the message is named gate message.

At next step S401, the processor 200 commands the memorizing of response messages received through the optical interface I/F 204 if some are received. For example, the response message is named report message in some PON networks. The report message is representative of resource requirement of the optical network unit ONU which transferred the report message.

In some other PON networks, no message is transferred and received as disclosed at steps S400 and S401.

At next step S402, the processor 200 checks if at least one of the optical network units ONU1 to ONUK is in idle state for uplink transmission.

An optical network unit ONU is in idle state for uplink transmission when at least a part of the components used for uplink transmission are put in a state in which their electric power consumption is reduced.

In some PON networks, one optical network unit is considered to be in idle state for uplink transmission when no response is received from the optical network unit ONU.

In some other PON networks, one optical network unit is considered to be in idle state for uplink transmission when the optical network unit ONU sends or has sent a message notifying that it is in idle state.

If no optical network unit ONU is in idle state for uplink transmission, the processor 200 moves to step S403. Otherwise, the processor 200 moves to step S404.

At step S403 the processor 200 does not reserve a wake up time period (WP) in the next uplink cycle.

A wake up time period is a time period in which an optical network unit ONU which was in idle state may transfer a message to the optical line terminal OLT in order to notify the optical line terminal OLT that it requests to exit from the idle state, i.e. it requests resources for uplink data transmission.

After the step S403, the processor 200 allocates resources to optical network units ONU in a similar way as disclosed in classical PON networks.

At step S404, the processor 200 memorizes in RAM memory 203 information identifying each optical network unit ONU which has been identified as being in idle state.

At next step S405, the processor 200 reserves a wake up time period WP in the next uplink cycle.

At next step S406, the processor 200 notifies to at least one each optical network unit ONU which is in idle state of the location of the wake up time period WP within the cycle. For example, the location of the wake up time period WP is comprised in a cycle synchronisation message. For example, the cycle synchronisation message is named index message.

The wake up time period may be common for each optical network unit ONU or the wake up time period may be subdivided into plural timeslots. One timeslot may be allocated to each optical network unit ONU in idle state for uplink transmission, or one timeslot may be allocated to each optical network unit ONU which is in idle state for uplink transmission or not, or plural timeslots are allocated, each of them being allocated to a subset of the optical network units ONU1 to ONUK.

At next step S407, the processor 200 checks if at least one message is received in the wake up time period. The at least one message is representative of a request to transfer data by at least one optical network unit ONU.

If no message is received in the wake up time period, the processor 200 returns to step S400.

If at least one message is received in the wake up time period, the processor 200 moves to step S408.

At step S408, the processor 200 checks if a collision of plural messages transferred by different optical network units ONU occurs in a wake up time period or in at least one timeslot.

If a collision of plural messages transferred by different optical network units ONU occurs, the processor 200 moves to step S409. Otherwise, the processor 200 moves to step S413.

At step S409, the processor 200 identifies each possible optical network unit which may have transferred a message in the wake up time period or in the at least one timeslot in which the collision occurred.

At next step S410, the processor 200 commands the transfer of a message to each identified optical network unit ONU in order to poll the or each identified optical network unit ONU for its queue status. For example, the message is named gate message.

At next step S411, the processor 200 commands the memorizing of response messages received through the optical interface I/F 204. For example, the response is named report message. The report message is representative of resource requirement of the optical network unit ONU which transferred the report message.

In some PON networks, no message is transferred or received at steps S410 and S411. In this case, resource requirements are evaluated by ad-hoc algorithms executed by the optical line terminal OLT, for example, by analysing previous uplink traffic.

At next step S412, the processor 200 allocates resources to the or each identified optical network unit ONU.

Resources may be allocated according to report messages.

After completion of this step, the processor 200 returns to step S400.

At next step S413, the processor 200 commands the transfer of a message to the optical network unit ONU which sends the message received at step S407 in order to poll the optical network units for its queue status. For example, the message is named gate message.

At next step S414, the processor 200 commands the memorizing of response message received through the optical interface I/F 204. For example, the response message is named report message. The report message is representative of resource requirement of the optical network unit ONU which transferred the report message.

In some PON networks, no messages are transferred or received at steps S413 and S414. In this case, resource requirements are evaluated by ad-hoc algorithms executed by the optical line terminal OLT, for example, by analysing previous uplink traffic.

At next step S415, the processor 200 allocates resources to the or each identified optical network unit ONU.

Resources may be allocated according to the report message.

After completion of this step, the processor 200 returns to step S400.

**Fig. 5** discloses an example of an algorithm executed by an optical network unit for uplink idle state management according to the present invention.

More precisely, the present algorithm is executed by the processor 300 of each optical network unit ONU.

At step S500, the processor 300 detects the reception through the optical interface I/F 304 of information enabling the determination of the location of a wake up time period WP or a wake up timeslot WS within a cycle. For example, the location of the wake up time period WP or the wake up timeslot is comprised in a cycle synchronisation message. For example, the cycle synchronisation message is named index message.

At step S501, the processor 300 checks if data are comprised in the transmission queue stored in the RAM memory 303 of the optical network unit ONU.

If data are comprised in the transmission queue, the processor 300 moves to step S502. Otherwise, the processor 300 moves to step S513.

At step S502, the processor 300 checks if the optical network unit is in idle state for uplink transmission.

If the optical network unit ONU is in idle state for uplink transmission, the processor 300 moves to step S507. Otherwise, the processor 300 moves to step S503.

At step S503, the processor 300 detects the reception through the optical interface I/F 304 of a message giving opportunity to transfer the queue status of the optical network unit ONU.

At next step S504, the processor 300 commands the transfer through the optical interface I/F 304 of a response message. For example, the response message is named report message. A report message is representative of resource requirement of the optical network unit ONU.

In some PON networks, no message is transferred or received at steps S503 and S504. In this case, resource requirements are evaluated by ad-hoc algorithms executed by the optical line terminal OLT, for example, by analysing previous uplink traffic.

At next step S505, the processor 300 detects the reception through the optical interface I/F 304 of a message comprising information identifying uplink resources allocated to the optical network unit ONU for uplink transmission. For example, the message is named gate message.

At next step S506, the processor 300 commands the transfer through the optical interface I/F 304 of data stored in the transmission queue in the resources allocated to the optical network unit ONU.

After completion of this step, the processor 300 returns to step S500.

At step S507, the processor 300 sets the components used for uplink transmission in a state in which uplink transmission is operational.

At next step S508, the processor 300 commands the transfer through the optical interface I/F 304 of a wake up report WR in a wake up timeslot WS or wake up time period WP the location of which has been previously indicated by the optical line terminal OLT at step S500.

At step S509, the processor 300 detects the reception through the optical interface I/F 304 of a message giving opportunity to transfer the queue status of the optical network unit ONU. For example, the message is named gate message.

At next step S510, the processor 300 commands the transfer through the optical interface I/F 304 of a response message. For example, the response message is named report message. A report message is representative of resource requirement of the optical network unit ONU.

In some PON networks, no messages are transferred or received at steps S509 and S510. In this case, resource requirements are evaluated by ad-hoc algorithms executed by the optical line terminal OLT, for example, by analysing previous uplink traffic.

At next step S511, the processor 300 detects the reception through the optical interface I/F 304 of a message comprising information identifying uplink resources allocated to the optical network unit ONU for uplink transmission. For example, the message is a gate message.

At next step S512, the processor 300 commands the transfer through the optical interface I/F 304 of data stored in the transmission queue in the resources allocated to the optical network unit ONU.

After completion of this step, the processor 300 returns to step S500.

At step S513, the processor 300 checks if the optical network unit ONU is in idle state for uplink transmission.

If the optical network unit ONU is in idle state for uplink transmission, the processor 300 moves to step S500. Otherwise, the processor 300 moves to step S514.

At step S514, the processor 300 sets the optical network unit in idle state for uplink transmission.

After completion of this step, the processor 300 returns to step S500.

**Fig. 6** represents an example of a chronogram of uplink idle state management according to the present invention.

In the example of Fig. 6, the optical network unit ONUk is in idle state at time of occurrence of the wake up period WP1.

A cycle synchronisation message is transferred by the optical line terminal OLT to the optical network unit ONUk in each cycle.

The cycle synchronisation message S2 is transferred by the optical line terminal OLT to the optical network unit ONUk in the cycle CyU2.

The cycle synchronisation messages transferred by the optical line terminal OLT to the optical network unit ONUk in the cycles CyU3 and CyU4 are not shown in Fig. 6 for the sake of clarity.

For example, the cycle synchronisation message is named index message.

The index message notifies the cycle duration. The index message may indicate the location of a wake up time period WP or a wake up timeslot WS to the optical network units ONUk. The index message may also indicate the location and duration of the downlink data addressed to each ONUk, including the location and duration of the downlink broadcast traffic addressed to all the ONUk.

The optical network unit ONUk does not transfer a wake up report in the random wake up period WP1.

During the cycle noted CyU2, the optical network unit ONUk has data to transfer in the uplink channel. The optical network unit ONUk requests to switch to active state and a wake up report WR is transferred to the optical line terminal OLT during the wake up period WP2 of the cycle CyU2.

According to a particular mode of realisation of the present invention, the optical network unit ONUk transfers a wake up report WR to the optical line terminal OLT during a given wake up slot WS2k allocated to the optical network unit ONUk within the wake up period WP2.

In response, the optical line terminal OLT transfers a gate message GT to the optical network unit ONUk.

Following the gate message GT, the optical network unit ONUk transfers to the optical line terminal OLT a message report RPT comprising information representative of the queue status of the optical network unit ONU.

In response, the optical line terminal OLT transfers a gate message GT to the optical network unit ONUk. A gate message GT may comprise information representative of resources allocated to the optical network unit ONUk for uplink transmission and/or may be a message giving opportunity to send a report message RPT.

Following the gate message GT, the optical network unit ONUk transfers to the optical line terminal OLT data in the allocated resources.

It has to be noted here that in a variant, the wake up report WR may comprise information representative of the queue status of the optical network unit ONU. In that case, only one gate message GT needs to be transferred. No RPT message needs to be transferred.

In the example of Fig. 6, no wake up time periods WP are comprised in the cycles noted CyU3 and CyU4 as there is no optical network unit ONU which is in idle state.

It has to be noted here that in a variant, a wake up time period WP may be inserted in each cycle independently of the fact that at least one optical network unit ONU is in idle state.

**Fig. 7** discloses an example of an algorithm executed by an optical line terminal for downlink idle state management according to the present invention.

More precisely, the present algorithm is executed by the processor 200 of the optical line terminal OLT in parallel with the algorithm disclosed in Fig. 4 or instead of the algorithm disclosed in Fig. 4.

At step S700, the processor 200 checks if data are received through the network interface I/F 206.

As long as no data is received, the processor 200 executes the step S700. When data is received, the processor 200 moves to step S701.

At step S701, the processor 200 identifies the optical network unit ONU to which the received data are intended.

At next step S702, the processor 200 stores in a transmission queue for identified optical network unit ONU the received data.

At next step S703, the processor 200 checks if it is time to transfer a cycle synchronisation message to each of the optical network units ONU1 to ONUK.

For example, the cycle synchronisation message is named index message and is as the one already disclosed in reference to Fig. 6.

The index message notifies the cycle duration. The index message may indicate the location of a wake up time period WP or a wake up timeslot WS to the optical network units ONU.

The index message may indicate the location of broadcasted information to each optical network unit ONU1 to ONUK.

If it is not time to transfer a cycle synchronisation message, the processor 200 returns to step S700.

At step S704, the processor 200 commands the transfer of a cycle synchronisation message to each of the optical network units ONU1 to ONUK.

Each cycle synchronisation message further comprises information enabling the destination optical network unit ONU to be aware of the time period in which data are transferred to it.

At next step S705, the processor 200 commands the transfer of data to the identified optical network unit ONU at defined period of time.

After completion of this step, the processor 200 returns to step S700.

**Fig. 8** discloses an example of an algorithm executed by an optical network unit for downlink idle state management according to the present invention.

More precisely, the present algorithm is executed by the processor 300 of each optical terminal unit ONU1 to ONUK in parallel with the algorithm disclosed in Fig. 5 or instead of the algorithm disclosed in Fig. 5.

At step S800, the processor 300 checks if it is time to receive a cycle synchronisation message from the optical line terminal OLT. For example, the cycle synchronisation message is an index message as disclosed in Figs. 6 and 7.

As far as it is not time to receive a cycle synchronisation message, the processor 800 executes the step S800. When it is time to receive a cycle synchronisation message, the processor 300 moves to step S801.

At step S801, the processor 300 sets the components used for downlink reception in a state in which downlink reception is active or operational i.e. in a state wherein the electric power consumption of the optical network unit for downlink reception is not reduced.

At next step S802, the processor 300 detects, through the optical interface I/F 304, the reception of the cycle synchronisation message from the optical line terminal OLT.

At next step S803, the processor 300 sets the optical unit ONU in an idle state for downlink reception.

An optical network unit is in idle state for downlink reception when at least a part of the components used for downlink reception is put in a state in which their electric power consumption is reduced.

At next step S804, the processor 300 activates a timer which is representative of the time duration in which the optical network unit ONU will start to receive data intended to it from information comprised in the received cycle synchronisation message.

At next step S805, the processor 300 checks if it is time to receive data from the optical line terminal OLT by checking if the timer activated at step S804 is elapsed.

The processor 300 executes the step S805 as far as the timer activated at step S804 is elapsed.

If it is time to receive data from the optical line terminal OLT, the processor 300 moves to step S806.

At step S806, the processor 300 sets the components used for downlink reception in a state in which downlink reception is active or operational.

At next step S807, the processor 300 activates a timer which is representative of the time duration in which the optical network unit ONU will receive data intended to it from information comprised in the received cycle synchronisation message.

At next step S808, the processor 300 detects, through the optical interface I/F 304, the reception of data from the optical line terminal OLT.

At next step S809, the processor 300 checks if it is time to stop to receive data from the optical line terminal OLT by checking if the timer activated at step S807 is elapsed.

If it is time to stop to receive data from the optical line terminal OLT, the processor 300 moves to step S810. Otherwise, the processor 300 returns to step S808.

At next step S810, the processor 300 sets the optical unit ONU in an idle state for downlink reception.

After completion of this step, the processor 300 returns to step S800.

**Fig. 9** represents an example of a chronogram of downlink idle state management according to the present invention.

The optical network unit ONU is not in downlink idle state at time periods Act1 to Act5 which correspond to the reception of cycle synchronisation messages S1, S2 and S3 or to the reception of data D1 and D2 intended for the optical network unit ONU. Otherwise, the optical network unit ONU is in downlink idle state.

The optical network unit ONU derives from information comprised in cycle synchronisation messages of cycles CyD1, CyD2 and CyD3 when it has to switch in downlink idle state.

Naturally, many modifications can be made to the embodiments of the invention described above without departing from the scope of the present invention.

## Claims

1. Method for reducing the electric power consumption of an optical network unit of a passive optical network, the passive optical network comprising an optical line terminal connected to a telecommunication network, a splitter and plural optical network units, the optical line terminal being linked to the splitter through an optical fibre, the splitter being linked to the plural optical network units through respective optical fibres, **characterised in that** the method comprises the steps, executed by the optical line terminal, of:
- receiving data from the telecommunication network,
- identifying the optical network unit to which data are intended,
- memorizing the data,
- transferring information enabling the determination, by the identified optical network unit, of a first time period in which the identified optical network unit receives data,
- transferring data according to the first time period.

2. Method according to claim 1, **characterised in that** information are transferred in a first message which further comprises information enabling the determination by at least the identified optical network unit of the next first message reception time.

3. Method according to claim 1 or 2, **characterised in that** the method further comprises the steps of:
- receiving, in a second time period, at least one second message which is representative of a request, by at least one optical network unit, to transfer data,
- identifying at least one optical network unit which is susceptible to transfer one second message,
- allocating resources of the passive optical network to the at least one identified optical network unit which is susceptible to transfer one second message.

4. Method according to claim 3, **characterised in that** the at least one optical network unit which is susceptible to transfer one second message is identified by identifying in which timeslot among timeslots of the second time period the at least one second message which is representative of a request to transfer data by the at least one optical network unit is transferred.

5. Method according to claim 4, **characterised in that** the method comprises further steps of:
- determining that at least one optical network unit has no data to transfer,
- inserting, within a time cycle, the second time period in which the at least one optical network unit which has no data to transfer may transfer at least one second message which is representative of a request, by the at least one optical network unit, to transfer data.

6. Method according to claim 5, **characterised in that** the method comprises further step of transferring information enabling the determination within the time cycle of the second time period in which the at least one optical network unit which has no data to transfer may transfer at least one second message.

7. Method according to claim 5 or 6, **characterised in that** the method comprises further step of:
- determining each optical network unit that has data to transfer,
- suppressing, within the time cycle, the second time period in which at least one optical network unit which has no data to transfer may transfer at least one second message which is representative of a request, by the at least one optical network unit, to transfer data.

8. Method for reducing the electric power consumption of an optical network unit of a passive optical network, the passive optical network comprising an optical line terminal connected to a telecommunication network, a splitter and plural optical network units, the optical line terminal being linked to the splitter through an optical fibre, the splitter being linked to the plural optical network units through respective optical fibres, **characterised in that** the method comprises the steps, executed by at least one optical network unit, of:
- receiving information enabling the determination of a first time period in which the optical network unit receives data,
- setting at least one component used for receiving signals from the optical fibre linking the optical network unit to the splitter in a state wherein the electric power consumption of the optical network unit is reduced according to the determined first time period.

9. Method according to claim 8, **characterised in that** information are received in a message which further comprises information enabling the determination of the next first message reception time and **in that** the at least one component used for receiving signals from the optical fibre linking the optical network unit to the splitter in the state wherein the electric power consumption of the optical network unit is reduced according to information enabling the determination of the next first message reception time.

10. Method according to claim 8 or 9, **characterised in that** the method further comprises the steps of:
- determining that no data have to be transferred data through the optical fibre linking the optical network unit to the splitter,
- setting at least one component used for transferring signals through the optical fibre linking the optical network unit to the splitter in a state wherein the electric power consumption of the optical network unit is reduced.

11. Method according to claim 10, **characterised in that** the method further comprises the steps of:
- identifying a request to transfer data through the optical fibre linking the optical network unit to the splitter,
- setting at least one component used for transferring signals through the optical fibre linking the optical network unit to the splitter in a state wherein the electric power consumption of the optical network unit is not reduced,
- transferring in a second time period one second message which is representative of a request, by the optical network unit, to transfer data.

12. Device for reducing the electric power consumption of an optical network unit of a passive optical network, the passive optical network comprising an optical line terminal connected to a telecommunication network, a splitter and plural optical network units, the optical line terminal being linked to the splitter through an optical fibre, the splitter being linked to the plural optical network units through respective optical fibres, **characterised in that** the device for limiting the electric power consumption is included in the optical line terminal and comprises :
- means for receiving data from the telecommunication network,
- means for identifying the optical network unit to which data are intended,
- means for memorizing the data,
- means for transferring information enabling the determination by the identified optical network unit of a first time period in which the identified optical network unit receives data,
- means for transferring data according to the first time period.

13. Device for reducing the electric power consumption of an optical network unit of a passive optical network, the passive optical network comprising an optical line terminal connected to a telecommunication network, a splitter and plural optical network units, the optical line terminal being linked to the splitter through an optical fibre, the splitter being linked to the plural optical network units through respective optical fibres, **characterised in that** the device for limiting the electric power consumption is included in one optical network unit and comprises:
- means for receiving information enabling the determination of a first time period in which the optical network unit receives data,
- means for setting at least one component used for receiving signals from the optical fibre linking the optical network unit to the splitter in a state wherein the electric power consumption of the optical network unit is reduced according to the determined first time period.

14. Computer program which can be directly loadable into a programmable device, comprising instructions or portions of code for implementing the steps of the method according to claims 1 to 7, when said computer program is executed on a programmable device.

15. Computer program which can be directly loadable into a programmable device, comprising instructions or portions of code for implementing the steps of the method according to claims 8 to 11, when said computer program is executed on a programmable device.
